# EUROPEAN PATENT APPLICATION

(11) **EP 2 009 947 A2**
(43) Date of publication of application: **31.12.2008**
(21) Application number: 08158727.1
(22) Date of filing: 23.06.2008
(51) Int. Cl.: H04Q 7/38

(54) **Method and system for emergency number conversion as well as a server and a user terminal thereof**

(30) Priority: 25.06.2007 CN 200710123479; 13.03.2008 WO PCT/CN2008/070488
(71) Applicant: Huawei Technologies Co., Ltd., Longgang District, Shenzhen Guangdong 518129 (CN)
(72) Inventor: Yu, Zhou, 518129, Shenzhen (CN)
(74) Representative: Hengelhaupt, Jürgen

(57) **Abstract**

A method and system for emergency number conversion, as well as a server and a user terminal arc provided. The method includes: receiving a registration request of a user; downloading a home location emergency number of the user according to the registration request; and establishing a number conversion table containing the home location emergency number of the user and a corresponding roaming location emergency number.

The number conversion table may be established according to the registration request of the user. When the user roams, the visited location emergency number is the roaming location emergency number. The number conversion table is changed when the roaming location of the user changes. Accordingly, the user may dial his/her habitual home location emergency number in the case of emergency to connect to local emergency call center no matter in which country or region he/she roams, thereby enabling the emergency call to ensure his/her security.

## Description

The application claims priorities from Chinese patent application No. 200710123479.8 submitted on June 25, 2007 and entitled "A Method and system for emergency number conversion, as well as a server and a user terminal", and International application No. PCT/CN2008/070488 submitted on March 13, 2008, entitled "A Method and system for emergency number conversion, as well as a server and a user terminal", the contents of which are incorporated herein by reference.

### Field of the Invention

The invention relates to the field of emergency call, and in particular to a method and system for emergency number conversion, as well as a server and a user terminal.

### Background of the Invention

When a terminal dials an emergency call number, the telecommunication system judges whether the dialed number is an emergency number. If the dialed number is an emergency number, the telecommunication system directly connects the terminal to an emergency call center of the area by using call resources pre-reserved in the telecommunication system. During this process, the telecommunication system ignores some conventional checks such as user identity information check and user account information check, to ensure the put-through rate of the call.

During the process of conceiving the invention, the inventor discovered some problems in a first existing technique as follows:

Terminal users have to know local emergency numbers. However, when moving around various regions or countries, a terminal user may have no knowledge of a local emergency number, and can not call for help in the case of emergency, thereby endangering his/her life.

### Summary of the Invention

Embodiments of the invention provide a method and system for emergency number conversion, as well as a server and a user terminal, which allow a user to dial his/her habitual emergency number in the case of emergency when the user is located in different regions and countries.

An embodiment of the invention provides a method for emergency number conversion. The method may include:
receiving a registration request of a user;
downloading a home location emergency number of the user according to the registration request; and
establishing a number conversion table containing the home location emergency number of the user and a corresponding roaming location emergency number.

Another embodiment of the invention provides a method for emergency number conversion. The method may include:
sending a registration request of a user;
downloading a visited location emergency number of the user according to the registration request; and
establishing a number conversion table containing the visited location emergency number of the user and a corresponding home location emergency number.

Another embodiment of the invention provides a server. The server may include:
a storage unit, adapted to store a visited location emergency number of a user;
a download unit, adapted to download a home location emergency number of the user according to a registration request of the user; and
a match unit, adapted to establish a number conversion table containing the home location emergency number of the user downloaded by the download unit and the corresponding visited location emergency number stored in the storage unit.

Another embodiment of the invention provides a user terminal. The user terminal may include:
a storage unit, adapted to store a home location emergency number of a user;
a download unit, adapted to download a visited location emergency number of the user according to a registration request of the user; and
a match unit, adapted to establish a number conversion table containing the visited location emergency number downloaded by the download unit and the corresponding home location emergency number of the user stored in the storage unit.

A number conversion table containing a home location emergency number of a user and a corresponding visited location emergency number may be established according to the registration request of the user. When the user roams, the visited location emergency number is the roaming location emergency number. The number conversion table is changed when the roaming location of the user changes. In this way, the user may dial his/her habitual home location emergency number in the case of emergency to connect to the local emergency call center no matter in which country or region he/she roams, thereby enabling the emergency call to ensure his/her security.

The home location emergency number may be downloaded from the home location server. The home location server may store all the home location emergency numbers therein. When each of the users belonging to the home location server roams, each visited location server, i.e. each roaming location server, may download from this home location server. In this way, the data is reliably stored in a centralized manner.

The home location emergency number may alternatively be stored in a user terminal of the user. When receiving a registration request, the user terminal may obtain the home location emergency number from the registration request, or download the corresponding visited location emergency number. In this way, a number conversion table containing the home location emergency number and the corresponding visited location emergency number may be established even if the user has no rights of registration or the registration of the user fails, so as to enable the emergency call.

### Brief Description of the Drawings

Figure 1 is a flow chart illustrating a method for emergency number conversion according to an embodiment of the invention;

Figure 2 is a flow chart illustrating a method for emergency number conversion according to another embodiment of the invention;

Figure 3 is a schematic diagram illustrating the structure of a home location server according to an embodiment of the invention;

Figure 4 is a schematic diagram illustrating the structure of a user terminal according to an embodiment of the invention; and

Figure 5 is a schematic diagram illustrating the structure of a system for emergency number conversion according to an embodiment of the invention.

### Detailed Description of the Embodiments

In a telecommunication system, the location of a user is typically classified as two types, i.e. a home domain and a visited domain. The home domain refers to the registration location of the user, and the visited domain refers to the actual location of the user. For example, when a user buys a Subscriber Identity Module (SIM) of the Zhejiang Mobile Communication Company at Hangzhou city, the home domain and the visited domain of the user both are Hangzhou city. When the user moves to New York, U.S.A., the home domain of the user is Hangzhou city, while the visited domain of the user becomes New York. When the home domain and the visited domain are different, the visited domain is also referred to as "roaming location".

In the first embodiment, an emergency number conversion table is added in a roaming location server of a user. When the user initiates a roaming registration, a home location server of the user sends home location emergency number(s) to the roaming location server of the user via signaling. The roaming location server combines the home location emergency number(s) and corresponding roaming location emergency number(s) to form a number conversion table. When the user initiates an emergency call, the roaming location server converts the home location emergency number dialed by the user into a corresponding roaming location emergency number on receipt of the emergency call, before forwarding signaling.

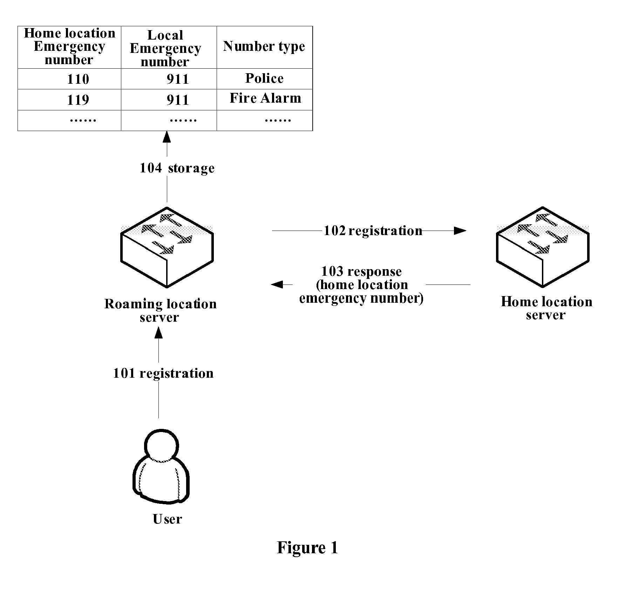

Figure 1 illustrates a method for emergency number conversion. As shown in Figure 1, the method may include the steps as follows.

101. A user starts up a terminal of the user, a roaming location server receives a roaming registration request of the user.

102. The roaming location server downloads home location emergency number(s) of the user according to the roaming registration request.

103. The roaming location server establishes a number conversion table containing the home location emergency number(s) and corresponding roaming location emergency number(s).

The number conversion table containing the home location emergency number(s) and the corresponding roaming location emergency number(s) is established according to the roaming registration request of the user, and is changed when the roaming location of the user changes. In this way, the user may dial his/her habitual home location emergency number in the case of emergency to connect to the local emergency call center no matter in which country or region he/she roams, thereby enabling the emergency call to ensure his/her security.

When the user dials his/her habitual home location emergency number, the roaming location server receives the home location emergency number of the user.

Then the roaming location server queries the number conversion table to obtain the roaming location emergency number corresponding to the home location emergency number of the user.

The roaming location server performs the emergency call using the roaming location emergency number.

In the above method, block 102 may include the steps as follows:

The roaming location server sends the roaming registration request to the home location server of the user to download configuration information of the user;

The home location server returns to the roaming location server response information including the home location emergency number(s). For example, the home location emergency number(s) may include, but not limited to, 110 (Police), 119 (Fire Alarm), and 120 (First Aid), etc.;

Upon receipt of the home location emergency number(s), the roaming location server maps the home location emergency number(s) to local emergency number(s) and constructs a number conversion table.

Alternatively, block 102 may include the blocks as follows:

The roaming location server sends an emergency number query request to the home location server of the user according to the roaming registration request;

The home location server returns the home location emergency number(s) to the roaming location server according to the emergency number query request;

Upon receipt of the home location emergency number(s), the roaming location server maps the home location emergency number(s) to local emergency number(s) and constructs a number conversion table.

In the above two solutions, the home location emergency number(s) of the user is(are) stored in the home location server of the user. When each user of the home location server roams, each corresponding roaming location server downloads from the home location server. In this way, the data is reliably stored in a centralized manner.

In the case that the user has no rights of registration or the registration of the user fails, the block 102 may alternatively include the steps as follows:

The terminal carries the home location emergency number(s) in the roaming registration request;

The roaming location server may obtain the home location emergency number(s) from the roaming registration request.

In this way, upon receipt of the home location emergency number(s), the roaming location server maps the home location emergency number(s) to local emergency number(s) and constructs a number conversion table.

In the above solution, the home location emergency number(s) is(are) stored in the user terminal. Therefore, when receiving a roaming registration request, the roaming location server may obtain the home location emergency number(s) from the roaming registration request even if the use has no rights of registration or the registration of the user fails, and may establish a number conversion table containing the home location emergency number(s) and the corresponding roaming location emergency number(s), so as to enable the emergency call.

In the embodiment, the method for emergency number conversion when a user roams is described, where a visited location server is referred to as a roaming location server. If the method of the embodiment is applied when the user is at the home location, the visited location server and the home location server of the user are the same server, the visited location emergency number(s), i.e. the roaming location emergency number(s), is (are) the home location emergency number(s).

In the second embodiment, instead of implementing the emergency number conversion function on a roaming location server of a user, the function may also be implemented on a user terminal.

Particularly, an emergency number list may be configured on the user terminal. When the user initiates a roaming registration request, the roaming location server of the user provides a local emergency number list to the user terminal. The user terminal combines and stores the roaming location emergency number(s) and the home location emergency number(s). According to the design of the telecommunication system, the roaming location server should provide the local emergency number(s) even if the user has no rights of registration or the registration of the user fails.

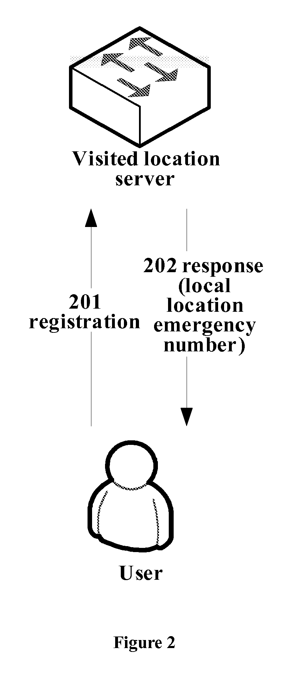

Figure 2 illustrates a method for emergency number conversion. As shown in Figure 2, the method may include the steps as follows.

201. A user terminal sends a roaming registration request of the user to a roaming location server.

202. The roaming location server delivers roaming location emergency number(s) to the user terminal when receiving the roaming registration request.

203. The user terminal establishes a number conversion table containing the roaming location emergency number(s) and corresponding home location emergency number(s).

The number conversion table containing the roaming location emergency number(s) and the corresponding home location emergency number(s) is established by the user terminal according to the roaming registration request, and is changed when the roaming location of the user changes. In this way, the user may dial his/her habitual home location emergency number in the case of emergency to connect to the local emergency call center no matter in which country or region he/she roams, thereby enabling the emergency call to ensure his/her security. In addition, the emergency number conversion of the user at the roaming location may be enabled even if the user has no rights of registration or the registration of the user fails.

When the user dials his/her habitual home location emergency number, the user terminal receives the home location emergency number of the user.

Then the user terminal queries the emergency number conversion table to obtain the roaming location emergency number corresponding to the home location emergency number of the user.

The user terminal performs the emergency call using the roaming location emergency number.

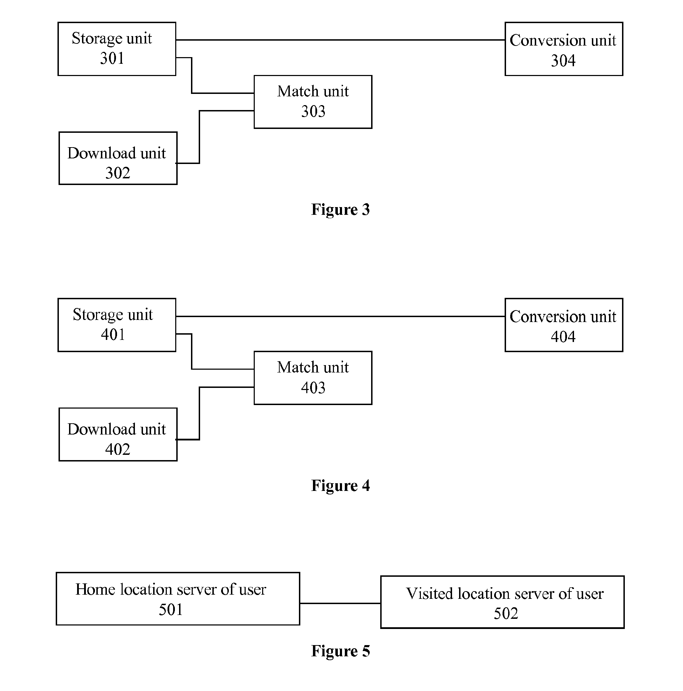

In the embodiment, the method for emergency number conversion when a user roams is described, where a visited location server is referred to as a roaming location server. If the method of the embodiment is applied when the user is at the home location, the visited location server and the home location server of the user are the same server, the visited location emergency number(s), i.e. the roaming location emergency number(s), is (are) the home location emergency number(s). Figure 3 illustrates a server arranged on hardware, corresponding to the method for emergency number conversion in the first embodiment. As shown in Figure 3, the server may include:

a storage unit 301, adapted to store a visited location emergency number of a user;

a download unit 302, adapted to download a home location emergency number of the user according to a registration request of the user; and

a match unit 303, adapted to establish a number conversion table containing the home location emergency number and the corresponding visited location emergency number of the user.

The server may further include a conversion unit 304 adapted to receive the home location emergency number of the user, query the number conversion table, and output the corresponding visited location emergency number.

Figure 4 illustrates a user terminal arranged on hardware, corresponding to the method for emergency number conversion in the second embodiment. As shown in Figure 4, the user terminal may include:

a storage unit 401, adapted to store a home location emergency number of a user;

a download unit 402, adapted to download a visited location emergency number of the user according to a registration request of the user;

a match unit 403, adapted to establish a number conversion table containing the visited location emergency number and the corresponding home location emergency number of the user.

The user terminal may further include a conversion unit 404 adapted to receive the home location emergency number of the user, query the number conversion table, and output the corresponding visited location emergency number.

Figure 5 illustrates a system for emergency number conversion arranged on hardware, corresponding to the method for emergency number conversion in the first embodiment. As shown in Figure 5, the system may include:

a home location server 501 of a user, adapted to authorize for a registration request of a user terminal;

a visited location server 502 of the user, adapted to download a home location emergency number of the user according to the registration request, and establish a number conversion table containing the home location emergency number of the user and the corresponding visited location emergency number.

A person skilled in the art shall appreciate that all or a part of the steps in the methods according to the embodiments may be implemented by a program instructing relevant hardware. The program may be stored in a computer readable medium such as ROM/RAM, disc and optical disc, and when executed, may execute the method including the following steps of: receiving a registration request of a user, downloading a home location emergency number of the user according to the registration request, and establishing an emergency number table containing the home location emergency number and a corresponding visited location emergency number.

A method and system for emergency number conversion, as well as a server and a user terminal, are described above in detail according to the invention. In the description, particular examples are described to illustrate the principle and embodiments of the invention, only for the purpose of facilitating a better understanding of the method and the concept of the invention. In addition, many modifications to the particular embodiments and application scopes may be recognized by a person skilled in the art based on the idea of the invention. In summary, the contents of the description should not be construed as a limitation to the invention.

## Claims

1. A method for emergency number conversion, **characterized by** comprising:
receiving a registration request of a user;
downloading a home location emergency number of the user according to the registration request; and
establishing a number conversion table containing the home location emergency number of the user and a corresponding roaming location emergency number.

2. The method according to claim 1, **characterized in that** downloading the home location emergency number of the user according to the registration request comprises:
sending the registration request to a home location server of the user; and
receiving response information comprising the home location emergency number of the user from the home location server of the user.

3. The method according to claim 1, **characterized in that** downloading the home location emergency number of the user according to the registration request comprises:
sending an emergency number query request to the home location server of the user according to the registration request; and
receiving the queried home location emergency number of the user.

4. The method according to claim 1, **characterized in that** downloading the home location emergency number of the user according to the registration request comprises:
obtaining the home location emergency number of the user from the registration request which includes the home location emergency number of the user.

5. The method according to any one of claims 1 to 4, **characterized by** further comprising:
receiving the home location emergency number of the user;
querying the number conversion table to obtain the visited location emergency number corresponding to the home location emergency number of the user; and
performing an emergency call according to the visited location emergency number.

6. A method for emergency number conversion, **characterized by** comprising:
sending a registration request of a user;
downloading a visited location emergency number of the user according to the registration request; and
establishing a number conversion table containing the visited location emergency number of the user and a corresponding home location emergency number.

7. The method according to claim 6, **characterized by** further comprising:
receiving the home location emergency number of the user;
querying the number conversion table to obtain the visited location emergency number corresponding to the home location emergency number of the user; and
performing an emergency call according to the visited location emergency number.

8. A computer readable medium, **characterized in that** computer program code according to any one of claims 1 to 7 is stored on the computer readable medium.

9. A server, **characterized by** comprising:
a storage unit, adapted to store a visited location emergency number of a user;
a download unit, adapted to download a home location emergency number of the user according to a registration request of the user; and
a match unit, adapted to establish a number conversion table containing the home location emergency number of the user downloaded by the download unit and the corresponding visited location emergency number stored in the storage unit.

10. The server according to claim 8, **characterized by** further comprising:
a conversion unit, adapted to receive the home location emergency number of the user, query the number conversion table established by the match unit, and output the corresponding visited location emergency number.

11. A user terminal, **characterized by** comprising:
a storage unit, adapted to store a home location emergency number of a user;
a download unit, adapted to download a visited location emergency number of the user according to a registration request of the user; and
a match unit, adapted to establish a number conversion table containing the visited location emergency number downloaded by the download unit and the corresponding home location emergency number of the user stored in the storage unit.

12. The server according to claim 10, **characterized by** further comprising:
a conversion unit, adapted to receive the home location emergency number of the user, query the number conversion table established by the match unit, and output the corresponding visited location emergency number.
